# EUROPEAN PATENT APPLICATION

(11) **EP 1 087 157 A2**
(43) Date of publication of application: **28.03.2001**
(21) Application number: 00119794.6
(22) Date of filing: 12.09.2000
(51) Int. Cl.: F16J 15/16

(54) **Seal and protective shield**

(30) Priority: 27.09.1999 US 156157 P
(71) Applicant: GREENE, TWEED OF DELAWARE, INC., Wilmington, DE 19801 (US)
(72) Inventor: Edwards, Timothy J., Harleysville, Pennsylvania 19438 (US); Quartapella, Carmin J., Schwenksville, Pennsylvania 19473 (US); Murphy, Kenneth, Barto, Pennsylvania 19504 (US); Rey, Robert A., Kulpsville, Pennsylvania 19443 (US)
(74) Representative: Fuchs Mehler Weiss & Fritzsche

(57) **Abstract**

A sealing device (11) for use in a sealing gland (14) in a first body to form a seal between the first body (15) and a second body (16). The sealing gland (14) has a bottom surface (58) and first (60A) and second (60B) side surfaces extending from the bottom surface (58). The sealing device (11) includes a seal body (13) having, when the seal body (13) is uncompressed and viewed in cross-section, a generally uppermost portion and a generally lowermost portion. The seal body (13) includes a first material (10) which is at least partially deformable. The first material (10) is generally disposed at least partially along the generally uppermost portion and at least partially along the generally lowermost portion thereof. The first material (10) contacts the bottom surface (58) of the sealing gland (14) when the seal body (13) is inserted into and at least partially disposed within the sealing gland (14). A second material is harder than the first material. The second material (12) is disposed generally along at least a portion of a lateral side of the seal body, when the seal body is viewed in cross-section, to form a shield. Wherein when the seal body (13) is positioned within the sealing gland (14) and is compressed the seal is formed between the first body (15) and the second body (16) by the first material (10) and an additional seal is formed by the shield (25) for extending the operational life of the sealing device (11) while preventing fluid flow between the first body (15) and the second body (16).

## Description

### CROSS REFERENCE TO RELATED APPLICATIONS

This application claims priority under 35 U.S.C. § 120 from U.S. Provisional Patent Application No. 60/156,157 entitled, "Combination Seal Element and Protective Shield," filed September 27, 1999, which is hereby incorporated by reference herein in its entirety.

### BACKGROUND OF THE INVENTION

The present invention relates to a sealing device and, more specifically, to a seal having a shield that protects the seal from contact with fluids flowing between first and second surfaces that border the sealing device.

One of the most common seals is the O-ring. The O-ring is a continuous ring of circular cross-section and is typically fabricated from a resilient flowable or elastomeric material such as natural or synthetic rubber. The O-ring is adapted to be positioned in an annular sealing gland formed in one of a pair of opposed static or relatively dynamic mating surfaces. At least some preloading is normally required to effect a seal between the two opposed mating surfaces at low fluid pressures.

Rubber O-rings have achieved prominence primarily due to their simplicity, low initial cost and ability to effect a generally satisfactory seal with substantially less total force being exerted between the mating surfaces than that required by sealing rings fabricated from harder materials.

However, where there is relative movement between the two mating surfaces bordering the O-ring, such movement may repeatedly occur and result in abrasion of the outer surface of the O-ring which causes peeling thereto. This condition is similar to galling in metal structures and results in the rapid deterioration of the O-ring. Angular deflections, which create varying distances between the O-ring and the surface to be sealed can create a condition where the O-ring is forced by pressure into the space so created, resulting in severe distortion of the O-ring and in some instances causing the O-ring to be forced from its sealing gland and dislodged or extruded therefrom. Additionally, rubber O-rings have a relatively high coefficient of friction, and, due to inherent material characteristics, are generally unsuited to some high pressure applications. While O-rings have been specifically discussed, the problems detailed above are common to many other types or designs of seals formed of resilient rubber-like material.

Various structural modifications have been developed to improve the high pressure performance characteristics of seals fabricated from resilient materials. For example, one improvement has involved varying the cross-sectional configuration of seals. Another example of improvements to seals has been to fabricate seals that are formed of harder materials such as polyurethane and polytetrafluorethylene ("PTFE") resin. Harder materials retain stable dimensional characteristics over relatively wider pressure ranges than the rubber materials and thus are more adapted to high pressure systems. Additionally, as an industrial material, PTFE has exhibited utility for use in harsh chemical environments which normally degrade many conventional metals and polymeric materials. PTFE is also usable over a broad temperature range from as high as 260 degrees Celsius to as low as near minus 273 degrees Celsius. However, in order to create an adequate seal (with the harder materials) at low pressure, it is necessary to provide a substantially higher initial loading than that required by relatively softer materials.

Another structural modification that has been developed to improve the wear characteristics of resilient material seals has been to incorporate a material insert (formed of PTFE) which is bonded to the elastomeric material of the seal ring as shown in U.S. Patent No. 3,918,726 which is hereby incorporated by reference herein in its entirety. The insert is flexible enough to permit the handling and installation of the first material and yet resistant to abrasion, extrusion and deformation caused by pressures or sliding movements and angular deflections of the mating surface which opposes the sealing gland.

While the above-mentioned insert protects the first material from abrasions due to the second surface, such an insert does not sufficiently protect the seal from fluids flowing between the two mating surfaces. The above insert is designed to primarily protect the seal from damage due to the mating surface opposing the scaling gland. Accordingly, such a seal is not suitable for use in semiconductor manufacturing equipment and other corrosive fluid environments. Thus, while the insert may prevent fluid transfer past the seal, the insert does not prevent contact between the flowing fluids and the relatively softer elastomeric seal. Furthermore, the insert is part of a single seal that is formed between the two mating surfaces. The single seal if formed by a combination of the insert and the elastomeric material. Accordingly, the insert only protects the seal from contact with the second surface. Additionally, while the insert may still protect the relatively soft elastomeric seal from the second surface while undergoing a twisting motion, the insert is less effective at protecting the relatively soft material of an elastomeric seal from high temperature, or corrosive fluids while undergoing a twisting motion.

The sealing device of the present invention overcomes the above stated disadvantages of the prior art. Each of the embodiments of a sealing device of the present invention orients a shield to block fluids from contacting the elastomeric seal. This increases the lifespan of the sealing device and, accordingly, reduces the downtime and associated maintenance costs to manufacturers using the sealing device of the present invention.

### SUMMARY OF THE INVENTION

Briefly stated, one embodiment of the present invention is directed to a sealing device for use in a sealing gland in a first body to form a seal between the first body and a second body. The sealing gland has a bottom surface and first and second side surfaces extending from the bottom surface. The sealing device including a seal body having, when the seal body is uncompressed and viewed in cross-section, a generally circular shape with a generally uppermost portion and a generally lowermost portion. The seal body includes a first material which is at least partially deformable. The first material is generally disposed at least partially along the generally uppermost portion and at least partially along the generally lowermost portion thereof. The first material contacts the bottom surface of the sealing gland when the seal body is inserted into and at least partially disposed within the sealing gland. The seal body includes a second material which is harder than the first material. The second material is disposed generally along at least a portion of a lateral side of the seal body, when the seal body is viewed in cross-section, to form a shield. The shield is configured to be flush with the first material so that an outer periphery of the seal body has a smooth generally circular shape when the seal body is viewed in cross-section and uncompressed. Wherein when the seal body is positioned within the sealing gland and is compressed the seal is formed between the first body and the second body by the first material and an additional seal is formed by the shield for extending the operational life of the sealing device while preventing fluid flow between the first body and the second body.

The present invention is alternatively directed to a sealing device for use in a sealing gland in a first body to form a seal between the first body and a second body. The sealing gland has a bottom surface and first and second side surfaces extending from the bottom surface. The sealing device includes a seal body having, when the seal body is uncompressed and viewed in cross-section, a generally uppermost portion and a generally lowermost portion. The seal body includes a first material which is at least partially deformable. The first material is generally disposed at least partially along the generally uppermost portion and at least partially along the generally lowermost portion thereof. The first material contacts the bottom surface of the sealing gland when the seal body is inserted into and at least partially disposed within the sealing gland. The seal body includes a second material which is harder than the first material. The second material, when the seal body is viewed in cross-section, is disposed generally along at least a portion of a lateral side of the seal body and at least a portion of the second material forms a shield having a generally rectangular shape disposed in a spaced apart fashion from the first material. Wherein when the seal body is positioned within the sealing gland and is compressed, the seal is formed between the first body and the second body by the first material and an additional seal is formed by the shield for extending the operational life of the sealing device while preventing fluid flow between the first body and the second body.

The present invention is alternatively directed to a sealing device for use in a sealing gland in a first body to form a seal between the first body and a second body. The sealing gland has a bottom surface and first and second side surfaces extending from the bottom surface. The sealing device includes a seal body having, when the seal body is uncompressed and viewed in cross-section, a generally uppermost portion and a generally lowermost portion. The seal body includes a first material which is at least partially deformable. The first material is generally disposed at least partially along the generally uppermost portion and at least partially along the generally lowermost portion thereof. The first material contacts the bottom surface of the sealing gland when the seal body is inserted into and at least partially disposed within the sealing gland. The seal body includes a second material which is harder than the first material. The second material, when the seal body is viewed in cross-section, is disposed generally along at least a portion of a lateral side of the seal body and at least a portion of the second material forms a shield having a generally L-shape disposed in a spaced apart fashion from the first material. Wherein when the seal body is positioned within the sealing gland and is compressed, the seal is formed between the first body and the second body by the first material and an additional seal is formed by the shield for extending the operational life of the sealing device while preventing fluid flow between the first body and the second body.

The present invention is alternatively directed to a sealing device for use in a sealing gland in a first body to form a seal between the first body and a second body. The sealing gland has a bottom surface and first and second side surfaces extending from the bottom surface. The sealing device includes a seal body having, when the seal body is uncompressed and viewed in cross-section, a generally uppermost portion and a generally lowermost portion. The seal body includes a first material which is at least partially deformable. The first material is generally disposed at least partially along the generally uppermost portion and at least partially along the generally lowermost portion thereof. The first material contacts the bottom surface of the sealing gland when the seal body is inserted into and at least partially disposed within the sealing gland. The seal body includes a second material which is harder than the first material. The second material is disposed generally along at least a portion of a lateral side of the seal body, when the seal body is viewed in cross-section, to form a shield. The shield is located to face a high pressure side of the seal. Wherein when the seal body is positioned within the sealing gland and is compressed the seal is formed between the first body and the second body by the first material and an additional seal is formed by the shield for extending the operational life of the sealing device while preventing fluid flow between the first body and the second body.

### BRIEF DESCRIPTION OF THE DRAWINGS

The following detailed description of preferred embodiments of the invention will be better understood when read in conjunction with the appended drawings. For the purpose of illustrating the invention, there are shown in the drawings embodiments which are presently preferred. It is understood, however, that the present invention is not limited to the precise arrangements and instrumentalities shown. In the drawings:
Fig. 1 is a cross-sectional view of a first preferred embodiment of a sealing device according to the present invention that is not undergoing compression;
Fig. 2 is a cross-sectional view of the sealing device of Fig. 1 compressed between a first and second body;
Fig. 3 is a cross-sectional view of a second preferred embodiment of a sealing device according to the present invention that is not undergoing compression;
Fig. 4 is a cross-sectional view of the scaling device of Fig. 3 compressed between a first and second body;
Fig. 5 is a cross-sectional view of a third preferred embodiment of a sealing device according to the present invention that is not undergoing compression; and
Fig. 6 is a cross-sectional view of the sealing device of Fig. 5 compressed between a first and second body.

### DETAILED DESCRIPTION OF THE INVENTION

Certain terminology is used in the following description for convenience only and is not limiting. The words "right," "left," "lower" and "upper" designate directions in the drawings to which reference is made. The words "inwardly" and "outwardly" refer to directions toward and away from, respectively, the geometric center of the sealing device and designated parts thereof. The terminology includes the words above specifically mentioned, derivatives thereof, and words of similar import. Additionally, the word "a," as used in the claims and in the corresponding portions of the specification, means "at least one." The word "fluid," as used in the specification and the claims, means "liquids, gases, plasmas or the like." Additionally, the term "high pressure side," as used in the specification and the claims, does not imply that a particular minimum pressure must exist on the side of the seal that is "high pressure." The term "high pressure side" refers only to the relative pressure difference between the two sides of the seal. For example, if a first side 27 of the seal is referred to as being the "high pressure side," it can only be deduced that the second side 29 of the seal is at a lower pressure than the first side 27 of the seal.

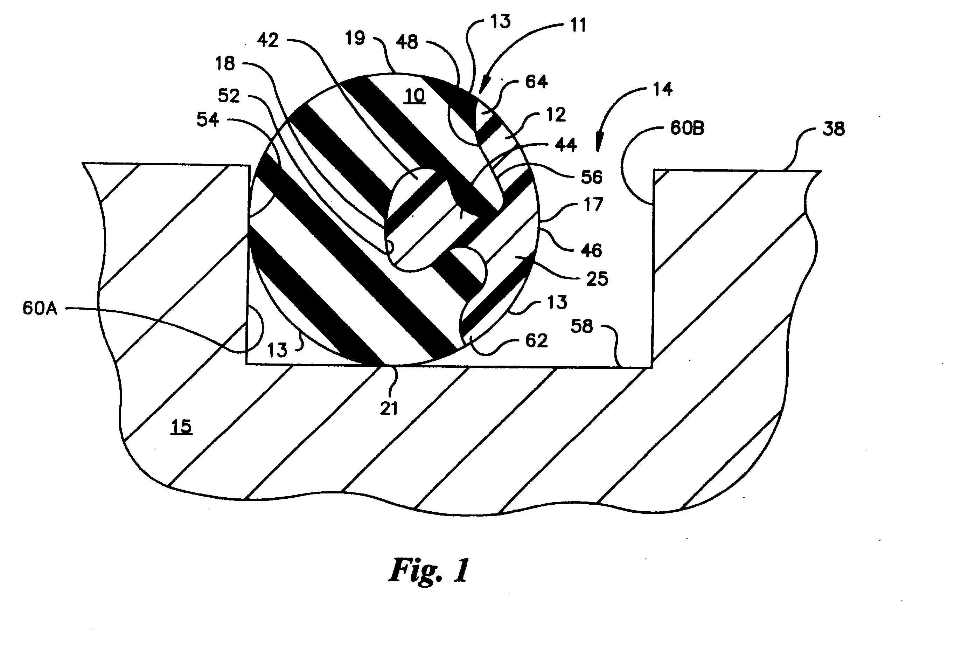

Referring to Figs. 1-6, wherein like numerals designate like elements throughout, there are shown three preferred embodiments of a sealing device according to the present invention, generally designated 11. Generally speaking, each of the three embodiments of the sealing device 11 is for use within a sealing gland 14 in a first body 15 to form a seal between the first body 15 and a second body 16. The sealing gland 14 has a bottom surface 58 and first and second side surfaces 60A, 60B extending from the bottom surface 58.

The first preferred embodiment of the sealing device 11 includes a seal body 13 which has, when the seal body 13 is uncompressed and viewed in cross-section (as shown in Figs. 1,3 and 5), a generally circular shape with a generally uppermost portion 19 and a generally lowermost portion 21. The seal body 13 includes a first material 10 which is generally at least partially deformable. The first material 10 is generally disposed at least partially along the generally uppermost portion 19 and at least partially along the generally lowermost portion 21 thereof. The first material 10 contacts a bottom surface 58 of the sealing gland 14 when the seal body 13 is inserted into and at least partially disposed within the sealing gland 14.

The seal body 13 also includes a second material 12 which is generally harder than the first material 10. The second material 12 is generally disposed along at least a portion of a lateral side 17 of the seal body 13, when the seal body 13 is viewed in cross-section, to form a shield 25. In the first preferred embodiment, the shield 25 is configured to be flush with the first material 10 so that an outer periphery of the seal body 13 has a smooth generally circular shape when the seal body 13 is viewed in cross-section and uncompressed.

When the seal body 13 is positioned within the sealing gland 14 and is compressed, a seal is formed between the first body 15 and the second body 16 by the first material 10 and an additional seal is formed by the shield 25 for extending the operational life of the sealing device 11 while preventing fluid flow between the first body 15 and the second body 16. Thus, in each of the three embodiments, the second material 12 forms a barrier that protects the first material 10 from the fluids flowing against one side of the sealing device 11.

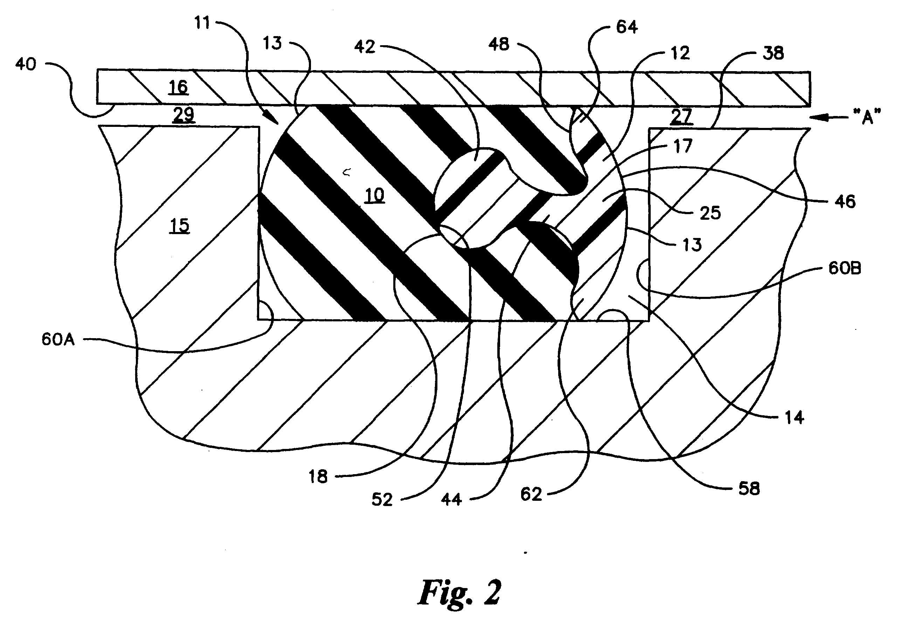

Referring to Figs 1 and 2, a first embodiment of a preferably annular sealing device 11 according to the present invention is shown. The sealing device 11 is positioned within the sealing gland 14 with the second material 12 oriented toward the second side surface 60B of the sealing gland 14. When viewed in cross-section, the seal body 13 preferably, but not necessarily, has a generally circular shape. Accordingly, the seal body can have a circular shape, an elliptical shape, an oblong shape or the like without departing from the scope of the present invention.

Those of ordinary skill in the art will appreciate from the present disclosure that the seal body 13, when viewed in cross-section, can have the shape of a hexagon, an octagon, a triangle, an irregular shape or the like without departing from the scope of the present invention. The second material 12 is preferably positioned along an outer surface of the sealing device 11 to protect the relatively softer first material 10.

While it is preferred that first preferred embodiment of the seal body 13, when viewed from a plan perspective (not shown), has an O-ring configuration, those of ordinary skill in the art will understand from this disclosure that the seal body 13 of any of the first through third preferred embodiments can have various configurations without departing from the spirit and scope of the present invention. For instance, when viewed in a plan perspective, the seal body 13 may have the shape of an O-ring, a straight line, a trapezoid or other polygon, an ellipse, an irregular shape or any shape used with manufacturing equipment (e.g., a generally rectangular shaped seal is commonly used with gate valves in semiconductor manufacturing equipment) as is known by those of ordinary skill in the art.

The sealing gland 14 is preferably correspondingly shaped and is positioned in the first body 15 for receiving the sealing device 11. Although the sealing gland 14 is preferably generally rectangular in shape when viewed in cross-section in each of the three preferred embodiments (as shown in Figs. 1-6), one skilled in the art will appreciate from this disclosure that other cross-sectional sealing gland geometries may be employed, based upon specific application requirements, without departing from the spirit and scope of the present invention. Moreover, one skilled in the art will appreciate from this disclosure that other applications may require that the cross-sectional geometry of the sealing gland 14 have certain nuances, again without departing from the sprit and scope of the present invention. For example, such nuances may include transition areas between the first and second side surfaces 60A, 60B and the bottom surface 58 of the sealing gland 14, curved or angled first and second side surfaces 60A, 60B or a curved bottom surface 58 of the sealing gland 14, or textured first and second side surfaces 60A, 60B or a textured bottom surface 58 of the sealing gland 14, etc. The sealing gland 14 is preferably designed so that upon compression of the seal body 13 the first material 10 fills up most of the free space in the sealing gland 14 that is not occupied by the second material 12.

While the present invention is preferably used with semiconductor manufacturing equipment, one of skill in the art will recognize from the disclosure that the sealing device 11 may be employed in any of a number of applications other than semiconductor manufacturing equipment. For example, the sealing device 11 may be employed in an aircraft landing gear piston-and-cylinder assembly.

The first material 10 is preferably softer than the second material 12. The relatively softer first material 10 is preferably capable of recovering its size and shape after deformation. The first material 10 is preferably formed using an elastomeric material. The first material 10 may be formed using polymeric material, such as nitrile rubber. However, it is understood by those skilled in the art from this disclosure that the first material 10 may be formed of other flexible substances, such as fluoroelastomers, ethylene-propylene and other natural or synthetic elastomeric materials of any type having the necessary wear resistance and material characteristics for a particular application. Selection of a suitable material is well within the capabilities of one of ordinary skill in the art when considered in combination with this disclosure.

When the scaling device 11 is positioned within the scaling gland 14, a first side 54 of the first material 10 is positioned adjacent to a first side surface 60A of the sealing gland 14 and a second side 56 of the first material 10 receives the second material 12. That is, it is preferable, but not necessary, that the second material 12 is disposed proximate to a lateral side 17 of the first material 10. The second material 12 reduces deterioration of the relatively softer first material 10 when the sealing device is exposed to high temperature, high pressure, or corrosive fluids.

The second material 12 is preferably formed using PTFE. However, those who are skilled in the art will appreciate through this disclosure that other materials may be used without departing from the spirit and scope of the present invention. For example, the second material 12 may be formed using filled PTFE, a nylon material, a PEEK (polyethylethylketone) material, a polyamide material, or other materials exhibiting appropriate heat resistant and corrosion resistant qualities.

When the seal body 13 is viewed in cross-section, the shield 25 preferably, but not necessarily, has the general shape of any one of an arc or a ring, a triangle, a polygon, an ellipse, a trapezoid and a circle. It is more preferable, but not necessary, that the shield have a generally rectangular shape when viewed in cross-section. The second material 12 extends along an outer portion of the first material 10 and has a length suitable to both contact the bottom surface 58 of the sealing gland 14 and the second surface 40 of the second body 16 when the first material 10 is compressed, as shown in Fig. 2.

While specific materials have been recited as preferably being used to form the first material 10 and the second material 12, those of skill in the art will appreciate from this disclosure that slightly stiffer or more pliant materials can be used to form either the first material 10 or the second material 12 depending upon the application for which the sealing device 11 is to be used. While the second material 12 preferably has the general cross-sectional shape of an arc of a ring, it is understood by those of ordinary skill in the art that the specific shape of the second material 12 can be varied without departing from the spirit and scope of the present invention. One important aspect of the second material 12 is that upon compression of the relatively softer first material 10, as shown in Figs. 2, 4, and 6, that a lower end 62 of the second material 12 contacts the bottom surface 58 of the sealing gland 14 and that an upper end 64 of the second material 12 also contacts the surface 40 on the second body 16 to form a generally continuous barrier between the first material 10 and flowing high temperature and/or high pressure fluids. Thus, as long as the second material 12 is capable of forming a barrier between the first material 10 and the fluid, the cross-sectional shape of the second material 12 is not limited to that of an arc of a ring. For example, the cross-sectional shape of the second material 12 may be triangular, polygonal, elliptical, trapezoidal, circular, L-shaped, etc.

Referring to Figs. 1 and 2, the second material 12 is preferably attached to the first material 10 using an interlocking projection 18. That is, when the seal body 13 is viewed in cross-section, the second material 12 preferably, but not necessarily, forms a projection 18 which extends generally outwardly from the shield 25 and into the first material 10. The projection 18 preferably includes a narrow leg portion 44 and a rounded anchor portion 42. The rounded anchor portion 42 preferably has a width which is greater than the narrow leg portion 44.

The variant of the first preferred embodiment shown in Figs. 1 and 2, when viewed in cross-section and uncompressed, preferably has a generally circular shape with the second material 12 positioned along a portion of the outer surface of the first material 10 along an arc of the cross-sectional view of the sealing device 11. It is preferable, but not necessary, that the first material forms a generally C-shape and that at least a portion of the shield 25 has the general shape of an arc of a ring. Referring to Fig. 1, a portion of the first material 10 is shaped, or formed, so that when the second material 12 is attached thereto, the combination of the first material 10 and the second material 12 preferably forms a seal body having a generally circular cross-section.

The second material 12 has first and second sides 46, 48. The first side 46 is disposed toward the directional flow of the working fluid (as shown by the arrow denoted "A") and the second side 48 is mated and in firm engagement with the second side 56 of the first material 10 and is preferably held in position using the interlocking projection 18. Those of ordinary skill in the art will recognize from this disclosure that the interlocking fit can be formed conversely. That is, a narrow leg portion (not shown) of the relatively softer first material 10 can extend into the second material 12 to form a rounded anchor portion (not shown) of the first material 10 inside the shield 25 without departing from the spirit and scope of the present invention.

A groove 52 in the first material 10 is preferably complimentarily shaped to receive the interlocking projection 18 of the second material 12. More specifically, the groove 52 has a rounded mating surface which is complimentary to the rounded anchor portion 42 such that the first material 10 and the second material 12 can be interlocked together by connecting the interlocking projection 18 and the groove 52 in the first material 10. This is accomplished by inserting the interlocking projection 18 into the groove 52 and pressing or sliding the first material 10 together with the second material 12 such that the first material 10 and second material 12 are connected together as shown.

While the preferred first embodiment of the present invention uses an interlocking fit to secure the second material 12 to the first material 10, those of skill in the art will appreciate from this disclosure that the seal 12 can be bonded to the first material 10 to present a flush circular shape when viewed in cross-section and not under compression. Alternatively, the second material 12 can be formed over the outer surface of a portion of the first material 10 and bonded thereto to form a capped portion along the outer perimeter of the first material 10. The bond between the second material 12 and the first material 10 is preferably, but not necessarily, formed by a bonding agent as is known to those of ordinary skill in the art.

When the seal body 13 of each of the three preferred embodiments is viewed in cross-section, the first material preferably has a first geometric center of gravity and the second material has a second geometric center of gravity. The first geometric center of gravity and the second geometric center of gravity preferably, but not necessarily, generally correspond to a different radius of curvature.

Referring to Figs. 1 and 2, the first embodiment of the sealing device 11 preferably occupies a generally circular area when viewed in cross-section and not under compression. When not under compression, the sealing device 11 extends above the first surface 38 of the first body 15. As the sealing device 11 is compressed, the second material 12 moves generally rightwardly inside the sealing gland 14 toward the second side surface 60B as the first material 10 deforms to occupy substantially all of the remaining space within the sealing gland 14.

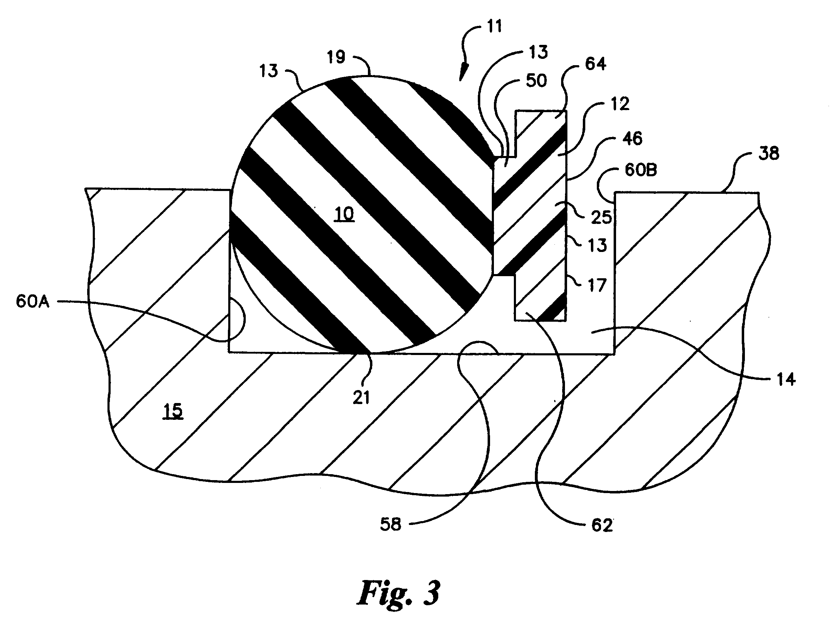

Referring to Figs. 3-6, second and third preferred embodiments of a sealing device 11 are illustrated. Except as specifically detailed herein, the specific geometries of the cross-section of the sealing device 11, the geometry of the sealing gland 14, the materials used to form the first material 10, and the materials used to form the second material 12 are generally that same as those recited above with respect to the first embodiment of the sealing device 11.

The sealing device 11 of the second preferred embodiment preferably includes a seal body 13 having, when the seal body 13 is uncompressed and viewed in cross-section, a generally uppermost portion 19 and a generally lowermost portion 21. The seal body 13 includes a first material 10 which is at least partially deformable. The first material 10 is generally disposed at least partially along the generally uppermost portion 19 and at least partially along the generally lowermost portion 21 thereof. The first material 10 contacts the bottom surface 58 of the sealing gland 14 when the seal body 13 is inserted into and at least partially disposed within the sealing gland 14. A second material 12 is harder than the first material 10. The second material 12, when the seal body 13 is viewed in cross-section, is disposed generally along at least a portion of a lateral side 17 of the seal body 13 and at least a portion of the second material 12 forms a shield 25 having a rectangular shape disposed in a spaced apart fashion from the first material 10.

The sealing device 11 of the third preferred embodiment preferably, but not necessarily, includes a seal body 13 having, when the seal body 13 is uncompressed and viewed in cross-section, a generally uppermost portion 19 and a generally lowermost portion 21. The seal body 13 includes a first material 10 which is at least partially deformable. The first material 10 is generally disposed at least partially along the generally uppermost portion 19 and at least partially along the generally lowermost portion 21 thereof. The first material 10 contacts the bottom surface 58 of the sealing gland 14 when the seal body 13 is inserted into and at least partially disposed within the sealing gland 14. The seal body 13 includes a second material 12 which is harder than the first material 10. The second material 12, when the seal body 13 is viewed in cross-section, is disposed generally along at least a portion of a lateral side 17 of the seal body 13 and at least a portion of the second material 12 forms a shield 25 having a generally L-shape disposed in a spaced apart fashion from the first material 10.

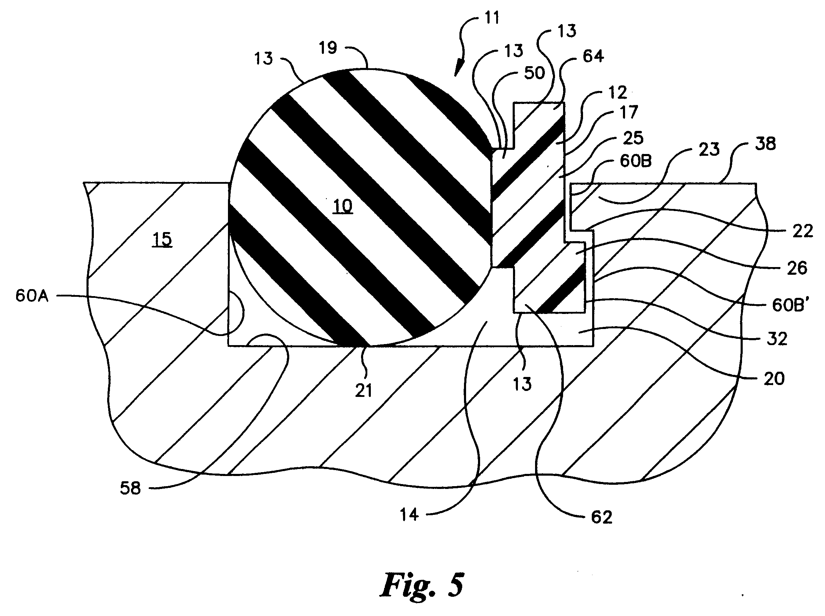

Referring to Figs. 3 and 5, when the seal body 13 of the second and third preferred embodiments is uncompressed and viewed in cross-section, the first material 10 preferably, but not necessarily, has a generally circular shape with a flat side. However, those of ordinary skill in the art will appreciate from this disclosure that the first material 10 may have a generally C-shape (similar to that shown in Fig. 1) or a circular shape without departing from the scope of the present invention. Those of ordinary skill in the art will also appreciate from the present disclosure that the first material 10 of any of the preferred embodiments, when viewed in cross-section, can have the shape of a hexagon, an octagon, a triangle, an irregular shape or the like without departing from the scope of the present invention.

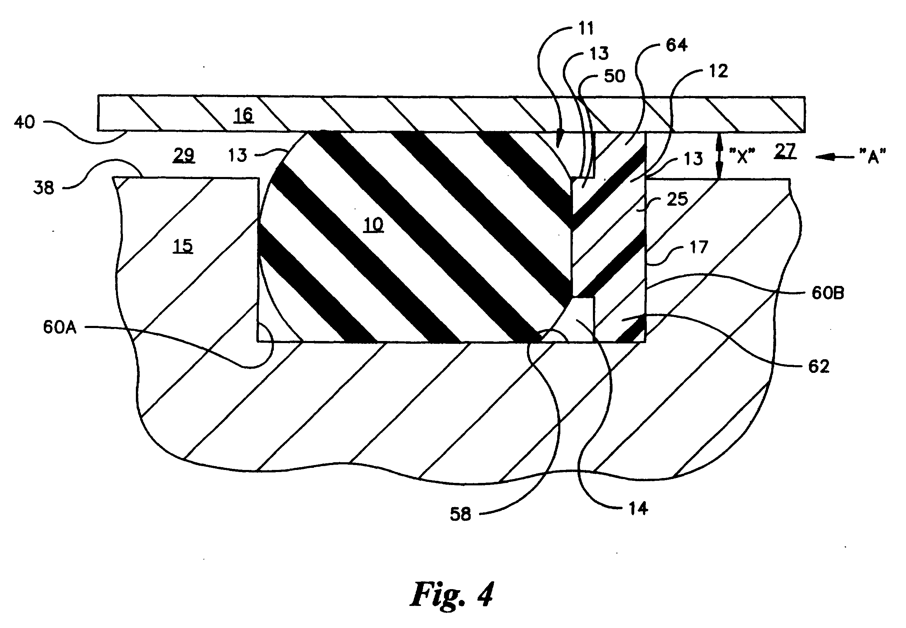

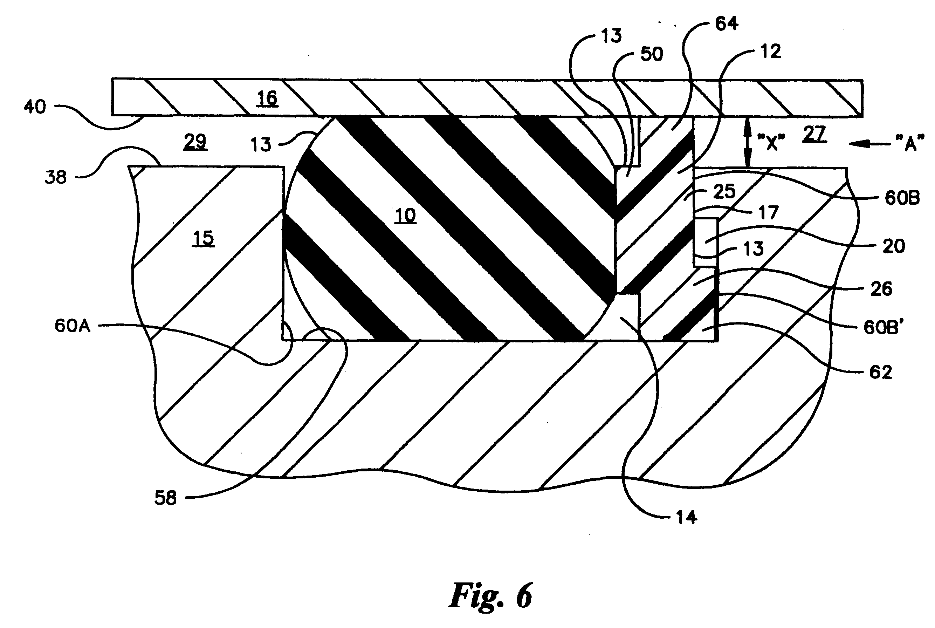

Referring to Figs. 4 and 6, the seal bodies 13 of the second and third preferred embodiments are preferably, but not necessarily, sized so that, when the seal bodies 13 are compressed, the seal bodies 13 occupy substantially all of the sealing gland 14. Referring to Figs. 3 and 5, the shield 25 of the second and third preferred embodiments is preferably, but not necessarily, separated from the first material 10 using a spacer 50. The spacer 50 increases the thickness of the shield 25, as measured in a direction generally parallel to the bottom surface 58 of the sealing gland 14. The increased thickness of the shield 25 results in the first material 10 having a reduced volume to occupy within the sealing gland 14. Thus, the spacer 50 reduces the amount of deformation of the first material 10 and increases the sealing force exerted between the first material 10 and each of the bottom surface 58 of the sealing gland 14 and the second surface 40 of the second body 16.

A portion of the second material 12 preferably, but not necessarily, forms the spacer 50 between the shield 25 and the first material 10. When viewed in cross-section the spacer 50 preferably has a generally rectangular shape. The spacer 50 is preferably shorter in vertical length than the remainder of the second material 12 and is preferably bonded to the first material 10 preferably along the flattened portion, in a manner that is well known to those of skill in the art. While it is preferred that the second and third embodiments of the sealing device 11 use a bond between the spacer 50 and the first material 10 to maintain the proper orientation and connection between the first material 10 and the second material 12, it is understood by those of skill in the art from this disclosure that the spacer 50 can be omitted without departing from the scope of the present invention. Regardless of whether a spacer 50 is used with the sealing device 11 of the second and third preferred embodiments, an interlocking projection (not shown) similar to that described in connection with the first preferred embodiment can be used in addition to or instead of bonding together the first and second materials 10, 12.

Referring to Figs. 3 and 5, the vertical dimension of the first material 10 is preferably greater than that of the second material 12 to allow the first material 10 to undergo compression before compression is experienced by the second material 12. This allows the sealing device to form a seal between the first and second surfaces 38, 40 while only a small compressive force is exerted between the first and second surfaces 38, 40.

When uncompressed, a portion of the first material 10 and the second material 12 extend above the first surface 38 of the first body 15. When compressed, as shown in Figs. 4 and 6, the first material 10 deforms to occupy most of the free space of the scaling gland 14 and pushes the second material 12 rightwardly to contact both the second side surface 60B and the bottom surface 58 of the sealing gland 14.

The predetermined distance "X" between the first surface 38 of the first body 15 and the second surface 40 of the second body 16 is determined by the particular application for which the seal is used. It is preferable that the second material 12 is designed to be slightly greater than the sum of the predetermined distance "X" and the height of the sealing gland 14 to form an additional seal between the first surface 38 of the first body 15 and the second surface 40 of the second body 16. Depending on the material selected to form the second material 12, and the corresponding amount of deformation and deflection generally experienced by the second material, the difference in size between the height of the second material 12 and the sum of the predetermined distance "X" and the height of the scaling gland 14 can be adjusted to allow the sealing device 11 to be used for the intended application while maintaining the additional seal between the first and second bodies 15, 16 formed by the shield 25.

Referring to Figs. 3 and 4, the second embodiment of a sealing device 11 according to the present invention operates as follows. After the sealing device 11 is positioned within the sealing gland 14, a portion of the first material 10 and the second material 12 project above the first surface 38 of the first body 15. As shown in Fig. 3, when not under compression and when viewed in cross-section, the first material 10 substantially has the shape of a circle with a flat side and the second material 12 substantially has the shape of a rectangle. While the second material 12 is shown symmetrically positioned with respect to the spacer 50, those of ordinary skill in the art will understand from this disclosure that the second material 12 can be asymmetrically aligned with the spacer 50 without departing from the spirit and scope of the present invention. One important aspect of the second material 12 is that the height or depth of the second material is established so that upon compression of the sealing device 11, the lower end 62 of the second material 12 contacts the lower right-hand corner of the sealing gland 14 (as viewed in Fig.4) and the upper end 64 of the second material 12 contacts the second surface 40 of the second body 16. The greater the thickness of the shield 25, and any spacer 50, (as measured generally parallel to the bottom surface 58 of the sealing gland 14) the less the first material can deform and the greater the force of the seal between the first material 10 and the first and second bodies 15, 16.

Referring to Figs. 5 and 6, a third preferred embodiment of a sealing device 11 according to the present invention is illustrated. The sealing gland 14 is similar to that of the first and second embodiments of the sealing device 11 except for the provision of a groove 20 in the second side surface 60B of the sealing gland 14. The bottom surface of the groove 20 is preferably flush with the bottom surface 58 of the sealing gland 14. The groove 20 extends upwardly along a portion of the second side surface 60B.

Referring to Figs. 5 and 6, it is preferable, but not necessary, that a portion of the shield 25 forms a lip 26 whereby when the seal body 13 is viewed in cross-section, the lip 26 extends generally outwardly from a remaining portion of the shield 25 and is oriented to protrude generally away from the first material 10. It is preferable that the lip 26 is sized and shaped for engaging the groove 20 in the second side surface of the sealing gland 14.

While the cross-section of the groove 20 is preferably generally rectangular in shape as shown in Figs. 5 and 6, those of skill in the art will understand that the shape of the groove 20 in the right adjacent wall 60 of the sealing gland 14 may have various shapes without departing from the spirit and scope of the present invention. For example, the groove 20 when viewed in cross-section, may have the shape of a trapezoid, a partial hexagon, an upwardly extending chute, an interlocking fit or the like. One important aspect of the groove 20 is that it complimentarily receives the lip 26 that projects from the shield 25.

Referring to Fig. 6, the seal body 13 of the third preferred embodiment is preferably, but not necessarily, sized so that, when the seal body 13 is compressed, the seal body 13 occupies the sealing gland 14 and the shield 25 is generally pressed against the second lateral side surface 60B of the sealing gland 14 and the lip 26 is engaged with the groove 20. While the lip 20 is preferably generally rectangular in shape, those of skill in the art will understand from this disclosure that the present invention is not limited to lips 26 that extend from the second material 12 in a generally rectangular shape. One important aspect of the lip 26 is that it aids in further securing the sealing device 11 in the proper position within the sealing gland 14 and, depending on the particular configurations of the lip 26 and the groove 20, can also prevent the first material 10 from twisting. Furthermore, those of skill in the art will appreciate from this disclosure that the lip 26 does not have to be aligned with the bottom of the shield 25. For example, the lip 26 can be positioned midway along the second material 12 (with the corresponding groove 20 positioned accordingly along the second side surface 60B).

Referring to Fig. 5, when the sealing device 11 is not compressed, the first material 10 and the second material 12 project above the first surface 38 of the first body 15. A portion of the lip 26 which extends from the second material 12 is preferably, but not necessarily, partially inserted within the groove 20 even while the sealing device element is uncompressed.

The third preferred embodiment of the sealing device 11 operates in a manner similar to that of the second preferred embodiment. When a second body 16 engages the sealing device 11 a seal is formed between the first and second surfaces 38, 40 by the sealing device 11. Additionally, the first material 10 is deformed to occupy substantially most of the free space within the sealing gland 14 and to push the shield 25 (including the associated spacer 50 and lip 26) rightwardly to contact the portion of the second side surface 60B that does not bear the groove 20. As the second material 12 is pushed rightwardly, the lip 26 of the second material 12 further engages the groove 20 in the second side surface 60B of the ceiling gland 14. The engagement between the lip 26 and the groove 20 further secures the sealing device 11 within the sealing gland 14 to hold the sealing device 11 in position.

Referring to Fig. 6, the predetermined distance "X" between the first surface 38 of the first body 15 and the second surface 40 of the second body 16 is determined by the particular application for which the seal is used. The particular size of the gap "X" is not pertinent to the present invention. The important aspect of the second material 12 is that it forms a barrier (by forming an additional seal) between the relatively soft first material 10 and the fluids (shown by the arrow denoted "A") that flow between the first and second surfaces 38, 40. While Fig. 6 shows the second material 12 engaging a portion of the second side surface 60B before the lip 26 contacts the side surface 60B' of the groove 20, those of skill in the art will appreciate from this disclosure that the dimensions of the lip 26 and the groove 20 can be designed so that the lip 26 and the first side 46 of the second material 12 contact the side surface 60B' of the groove 20 and a portion of the second side surface 60B, respectively, simultaneously.

While the second material 12 (along with the associated spacer 50, interlocking projection 18, and lip 26) are preferably formed as an integral whole as shown in Figs. 1-6, those of ordinary skill in the art will appreciate from this disclosure that the shield 25 (and the associated interlocking projection 18, spacer 50, and lip 20) may be formed of separate pieces which are joined together in a manner well known to those of ordinary skill in the art when considered in combination with this disclosure. Furthermore, while the first through third preferred embodiments of the sealing device 11 are shown with a single shield 25 positioned on one lateral side of the first material 10, it is understood by those of skill in the art from this disclosure that each of the three embodiments of the present invention can use a second shield (not shown) on another side of the first material 10 without departing from the scope of the present invention. It is understood by those of ordinary skill in the art when considered in combination with this disclosure that when the sealing device 11 uses multiple shields 25, the sealing device can simultaneously use shields 25 that correspond to different embodiments of the present invention without departing from the scope of the present invention. For example, the sealing device 11 can have a shield 25 with an interlocking projection 18 (i.e., the shield 25 of the first embodiment) on one side and can have a second shield 25 with a lip 26 (i.e., the shield 25 of the third embodiment) bonded on another side of the first material 10.

While the shield 25 in any of the three above embodiments can be oriented toward either the low pressure side of the seal (as used in some semiconductor applications) or can be oriented toward the high pressure side of the seal. While the shield 25 illustrated in the above embodiments of the present invention are preferably constructed using one layer or type of material, it is understood by those of ordinary skill in the art from this disclosure that the present invention is not limited to shields 25 formed using one layer of material. For example, any of the above embodiments can be formed using a shield 25 having various materials layered one on top of another to form a larger laminated (or a multi layer) shield having various properties and/or material layers that are suitable for a particular type of machinery or application.

It is recognized by those of ordinary skill in the art, that changes may be made to the above-described embodiments of the invention without departing from the broad inventive concept thereof. It is understood, therefore, that this invention is not limited to the particular embodiments of a sealing device 11 that are disclosed, but is intended to cover all modifications which are within the spirit and scope of the present invention as defined by the appended claims.

## Claims

1. A sealing device for use in a sealing gland in a first body to form a seal between the first body and a second body, the sealing gland having a bottom surface and first and second side surfaces extending from the bottom surface, the sealing device comprising:
a seal body having, when the seal body is uncompressed and viewed in cross-section, a generally circular shape with a generally uppermost portion and a generally lowermost portion, the seal body comprising:
a first material which is at least partially deformable, the first material being generally disposed at least partially along the generally uppermost portion and at least partially along the generally lowermost portion thereof, the first material contacting the bottom surface of the sealing gland when the seal body is inserted into and at least partially disposed within the sealing gland; and
a second material which is harder than the first material, the second material being disposed generally along at least a portion of a lateral side of the seal body, when the seal body is viewed in cross-section, to form a shield, the shield being configured to be flush with the first material so that an outer periphery of the seal body has a smooth generally circular shape when the seal body is viewed in cross-section and uncompressed, wherein when the seal body is positioned within the sealing gland and is compressed the seal is formed between the first body and the second body by the first material and an additional seal is formed by the shield for extending the operational life of the sealing device while preventing fluid flow between the first body and the second body.

2. The scaling device of claim 1 wherein when the seal body is uncompressed and viewed in cross-section, the first material forms a generally C-shape.

3. The sealing device of claim 1 wherein when the seal body is viewed in cross-section, at least a portion of the shield has the general shape of an arc of a ring.

4. The sealing device of claim 1 wherein when the seal body is viewed in cross-section, at least a portion of the second material forms a projection which extends generally outwardly from the shield and into the first material.

5. The sealing device of claim 4 wherein when the seal body is viewed in cross-section, the projection comprises a narrow leg portion which extends from the shield and then forms a rounded anchor portion.

6. The sealing device of claim 5 wherein when the seal body is viewed in cross-section, the rounded anchor portion has a width which is greater than the narrow leg portion.

7. The sealing device of claim 3 wherein, when the seal body is viewed in cross-section, the first material has a first geometric center of gravity and the second material has a second geometric center of gravity, the first geometric center of gravity and the second geometric center of gravity corresponding to a different radius of curvature.

8. A sealing device for use in a sealing gland in a first body to form a seal between the first body and a second body, the sealing gland having a bottom surface and first and second side surfaces extending from the bottom surface, the sealing device comprising:
a seal body having, when the seal body is uncompressed and viewed in cross-section, a generally uppermost portion and a generally lowermost portion, the seal body comprising:
a first material which is at least partially deformable, the first material being generally disposed at least partially along the generally uppermost portion and at least partially along the generally lowermost portion thereof, the first material contacting the bottom surface of the sealing gland when the seal body is inserted into and at least partially disposed within the sealing gland; and
a second material which is harder than the first material, the second material, when the seal body is viewed in cross-section, being disposed generally along at least a portion of a lateral side of the seal body and at least a portion of the second material forming a shield having a generally rectangular shape disposed in a spaced apart fashion from the first material, wherein when the seal body is positioned within the sealing gland and is compressed, the seal is formed between the first body and the second body by the first material and an additional seal is formed by the shield for extending the operational life of the sealing device while preventing fluid flow between the first body and the second body.

9. The sealing device of claim 8 wherein when the seal body is uncompressed and viewed in cross-section, the first material has a generally circular shape with a flat side.

10. The sealing device of claim 8 wherein the seal body is sized so that, when the seal body is compressed, the seal body occupies the sealing gland and the shield engages the second side surface of the sealing gland.

11. The sealing device of claim 8 wherein the second material forms a spacer between the shield and the first material.

12. The sealing device of claim 14 wherein when the seal body is viewed in cross-section, the spacer generally has a rectangular shape.

13. The sealing device of claim 12 wherein, when the seal body is viewed in cross-section, the first material has a first geometric center of gravity and the second material has a second geometric center of gravity, the first geometric center of gravity and the second geometric center of gravity corresponding to a different radius of curvature.

14. A sealing device for use in a sealing gland in a first body to form a seal between the first body and a second body, the sealing gland having a bottom surface and first and second side surfaces extending from the bottom surface, the sealing device comprising:
a seal body having, when the seal body is uncompressed and viewed in cross-section, a generally uppermost portion and a generally lowermost portion, the seal body comprising:
a first material which is at least partially deformable, the first material being generally disposed at least partially along the generally uppermost portion and at least partially along the generally lowermost portion thereof, the first material contacting the bottom surface of the sealing gland when the seal body is inserted into and at least partially disposed within the sealing gland; and
a second material which is harder than the first material, the second material, when the seal body is viewed in cross-section, being disposed generally along at least a portion of a lateral side of the seal body and at least a portion of the second material forming a shield having a generally L-shape disposed in a spaced apart fashion from the first material, wherein when the seal body is positioned within the sealing gland and is compressed, the seal is formed between the first body and the second body by the first material and an additional seal is formed by the shield for extending the operational life of the sealing device while preventing fluid flow between the first body and the second body.

15. The sealing device of claim 14 wherein when the seal body is uncompressed and viewed in cross-section, the first material has a generally circular shape with a flat side.

16. The sealing device of claim 14 wherein the second material forms a spacer between the shield and the first material.

17. The sealing device of claim 16 wherein when the seal body is viewed in cross-section, the spacer generally has a rectangular shape.

18. The sealing device of claim 14 wherein a portion of the shield forms a lip whereby, when the seal body is viewed in cross-section, the lip extends generally outwardly from a remaining portion of the shield and is oriented to protrude generally away from the first material.

19. The sealing device of claim 18 wherein the second side surface includes a groove for engaging the lip to reduce twisting of the sealing device.

20. The sealing device of claim 19 wherein the seal body is sized so that, when the seal body is compressed, the seal body occupies the sealing gland and the shield engages the second side surface of the sealing gland and the lip is engaged with the groove.

21. The sealing device of claim 20 wherein, when the seal body is viewed in cross-section, the first material has a first geometric center of gravity and the second material has a second geometric center of gravity, the first geometric center of gravity and the second geometric center of gravity corresponding to a different radius of curvature.

22. A sealing device for use in a sealing gland in a first body to form a seal between the first body and a second body, the sealing gland having a bottom surface and first and second side surfaces extending from the bottom surface, the scaling device comprising:
a seal body having, when the seal body is uncompressed and viewed in cross-section, a generally uppermost portion and a generally lowermost portion, the seal body comprising:
a first material which is at least partially deformable, the first material being generally disposed at least partially along the generally uppermost portion and at least partially along the generally lowermost portion thereof, the first material contacting the bottom surface of the sealing gland when the seal body is inserted into and at least partially disposed within the sealing gland; and
a second material which is harder than the first material, the second material being disposed generally along at least a portion of a lateral side of the seal body, when the seal body is viewed in cross-section, to form a shield, the shield being located to face a high pressure side of the seal, wherein when the seal body is positioned within the sealing gland and is compressed the seal is formed between the first body and the second body by the first material and an additional seal is formed by the shield for extending the operational life of the sealing device while preventing fluid flow between the first body and the second body.
